# EUROPÄISCHE PATENTSCHRIFT

(11) **EP 2 652 445 B1**
(45) Veröffentlichungstag und Bekanntmachung des Hinweises auf die Patenterteilung: **13.04.2016**
(21) Anmeldenummer: 10805600.3
(22) Anmeldetag: 16.12.2010
(51) Int. Cl.: G01D 5/245

(54) **LESEKOPF**
READ HEAD
TÊTE DE LECTURE

(43) Veröffentlichungstag der Anmeldung: 23.10.2013
(73) Patentinhaber: Pepperl & Fuchs GmbH, 68307 Mannheim (DE)
(72) Erfinder: FREUND, Thomas, 68199 Mannheim (DE); GALM, Timo, 69427 Mudau (DE)
(74) Vertreter: Koch Müller Patentanwaltsgesellschaft mbH
(86) Internationale Anmeldenummer: PCT/EP2010/007654
(87) Internationale Veröffentlichungsnummer: WO 2012/079600

(56) Entgegenhaltungen:
- DE-A1-102006 004 938
- DE-A1-102008 044 739

## Beschreibung

Die Erfindung betrifft einen Lesekopf gemäß dem Oberbegriff des Patentanspruchs 1 und ein Verfahren zur Bestimmung der Absolutposition gemäß dem Oberbegriff des Patentanspruchs 12.

Ein derartiger Lesekopf ist beispielsweise aus DE 10 2006 004 938 A1 im Rahmen mit dem beschriebenen Positionsbestimmungssystem bekannt und dient insbesondere zur Bestimmung der Position eines Fahrzeuges. Als Geber für den Lesekopf werden RFID Transponder verwendet. Ein weiterer Lesekopf ist aus der WO 2008/101702 bekannt. Dabei wird zur Bestimmung der Position eines Drehrades mittels des Lesekopfes die Induktion der auf dem Drehrad angeordneten Magneten erfasst. Ein weiterer Lesekopf ist aus dem Positionsbestimmungssystem der DE 10 2008 044 739 A1 bekannt. Dabei wird mittels eines induktiven Weggebers die Position eines ersten Objekts relativ zu einem zweiten Objekt bestimmt. Hierzu fährt der Lesekopf bzw. die in dem Lesekopf enthaltene Sensoreinheit in der Nähe eines als Gebereinheit ausgebildeten Markierungsabschnitts vorbei. Eine weitere Vorrichtung und Verfahren zur Bestimmung der Position ist aus der WO 2005/012840 bekannt. Dabei wird in einem Lesekopf mittels eines Sensors die durch Permanentmagnete im Sensor veranlasste Induktion ausgewertet. Hierbei ist die dem Lesekopf angeordnete Sensoreinheit in der Lage die Induktion von mehreren Magneten gleichzeitig zu erfassen.

Ein weiteres Positionsbestimmungssystem ist aus der EP 0 472 028 A2 bekannt. Hierbei wird mittels einer RFID-Leseeinheit an einer Trägervorrichtung RFID Marken detektiert, um Richtungsänderungen oder Stopps der Trägervorrichtung zu veranlassen. Des Weiteren wird eine induktiv arbeitende Detektoreinheit verwendet, um eine Abweichung von einer Vorzugsrichtung zu detektieren. Weitere Systeme sind aus der EP 1 577 188 A2, der EP 1 770 373 A2 und aus der US 2002/ 129508 A1 bekannt.

Nachteilig an den bisherigen Leseköpfen ist es, dass die Position nicht unmittelbar zu jedem Zeitpunkt bestimmbar ist und oder der Aufbau eines Positionsbe-stimmungssystem unter Verwendung der herkömmlichen Leseköpfe in Verbindung mit den entsprechenden Gebereinheiten kostenintensiv in der Herstellung und Anwendung sind. Auch sind bei einem Einsatz von herkömmlichen Leseköpfen in einem Positionierungssystem bei einem Schienenfahrzeug die bisherigen Lösungen nicht hinreichend, insbesondere wenn beispielsweise bei Krananlagen in Hafengebieten mehrere 100 m mittels eines Krans durchfahren werden müssen. Dies gilt auch bei einem Einsatz als Lesekopf als Drehgeber bei Kränzen mit Durchmessen oberhalb mehreren Metern.

Vor diesem Hintergrund besteht die erstgenante Aufgabe der Erfindung darin, einen Lesekopf und als zweitgenannte Aufgabe eine Verwendung für einen Lesekopf anzugeben, die jeweils die Nachteile des Standes der Technik verringern.

Die erstgenannte Aufgabe wird durch ein Lesekopf mit den Merkmalen des Patentanspruchs 1, die zweitgenante Aufgabe durch ein Verfahren zur Bestimmung der Absolutposition eines Lesekopfs mit den Merkmalen des Patentanspruchs 12 gelöst. Vorteilhafte Ausgestaltungen der Erfindung sind jeweils Gegenstand von Unteransprüchen.

Gemäß dem ersten Gegenstand der Erfindung wird ein Lesekopf mit einer Sensoreinheit bereitgestellt, wobei die Sensoreinheit einen erste RFID Transponder Leseeinheit und eine erste Induktionsdetektoreinheit aufweist, und der Lesekopf eine Längsachse aufweist und in Richtung der Längsachse entlang einer Schiene verschiebbar ist, und eine mit der RFID Transponder Leseeinheit und mit der ersten Induktionsdetektoreinheit verbundene Auswerteeinheit vorgesehen ist, wobei die RFID Transponder Leseeinheit zur Absolutpositionsbestimmung eingerichtet ist und einen ersten Positionswert ausgibt, und die erste Induktionsdetektoreinheit zur Absolutpositionsbestimmung eingerichtet ist und einen zweiten Positionswert ausgibt, und wobei die Auswerteeinheit eingerichtet ist, eine Absolutposition aus dem ersten Positionswert und dem zweiten Positionswert zu bestimmen.

Gemäß dem zweiten Gegenstand der Erfindung wird ein Verfahren zur Bestimmung der Absolutposition offenbart, mit einem Lesekopf mit einer Sensoreinheit, wobei die Sensoreinheit eine erste RFID Transponder Leseeinheit und eine erste Induktionsdetektoreinheit aufweist, und der Lesekopf eine Längsachse aufweist und in Richtung der Längsachse entlang einer Schiene verschiebbar ist, und eine mit der RFID Transponder Leseeinheit und mit der erste Induktionsdetektoreinheit verbundene Auswerteeinheit vorgesehen ist, wobei von der RFID Transponder Leseeinheit zur Absolutpositionsbestimmung ein erster Positionswert ausgeben wird, und von der ersten Induktionsdetektoreinheit zur Absolutpositionsbestimmung ein zweiter Positionswert ausgegeben wird, und von der Auswerteeinheit eine Absolutposition aus dem ersten Positionswert und dem zweiten Positionswert bestimmt wird.

Ein Vorteil des erfindungsgemäßen Lesekopfes ist es, dass insbesondere in Verbindung mit einer entsprechenden Gebereinheit, die wenigstens einen RFID Transponder und ein aus einem metallischen Werkstoff bestehenden Geber - Teileinheit aufweist, ein sehr zuverlässiges und präzises Positionsbestimmungssystem bereitgestellt werden kann. Ein weiterer Vorteil der Ermittlungsart ist, dass sich die Absolutposition insbesondere unmittelbar nach dem Einschalten der Stromversorgung ohne Verschiebung des Lesekopfs bestimmen lässt. Hierzu sind sowohl der erste Wert als auch der zweite Wert unmittelbar nach Anschalten der Spannungsversorgung für die Auswerteeinheit verfügbar, ohne eine Relativbewegung des Lesekopfs zur Gebereinheit auszuführen zu müssen wie bei einem Inkrementalsystem und ohne auf einen Speicherwert zurückzugreifen. Ein anderer Vorteil eines derartigen Positionsbestimmungssystems ist, dass mittels der Kombination von zwei unterschiedlichen Arten von Sensoren im Lesekopf bzw. zwei Arten von Gebern die Genauigkeit der Absolutpositionsbestimmung mittels des Lesekopfes erhöht, insbesondere auch bei Distanzen oberhalb 10 m, vorzugsweise oberhalb 100 m, indem sich aus einer Aneinanderreihung der einzelnen Gebereinheiten mittels des Lesekopfes sehr präzise die Absolutpositionsdaten ermitteln lassen. Hierbei wird für jede Absolutposition aus einem ersten Wert und einem zweiten Wert die Position bestimmbar. Beide Werte werden jeweils mittels einer Absolutpositionsbestimmung ermittelt. Hierdurch setzt sich die jeweilige Absolutposition des Lesekopfes aus einem ersten Wert und einem zweiten Wert zusammen. Vorzugsweise ist die Leseeinheit und die Detektoreinheit auf einer Linie, welche im Wesentlichen parallel zur einer Längsachse des Lesekopfs verläuft, ausgebildet. Untersuchungen der Anmelderin haben gezeigt, dass mittels der Verwendung von RFID Transponder als Geber sich eine einfache und zuverlässige Möglichkeit eröffnet, dem Lesekopf bei einer Abfrage die erforderlichen Daten einfach und zuverlässig bereitzustellen. Hierbei ist es vorteilhaft, auf der Geberseite einfache kostengünstige passive RFID Transponder zu verwenden, die keine eigene Stromversorgung aufweisen. Die RFID Transponder arbeiten vorzugsweise im Bereich von 125 KHz, höchst vorzugsweise im Bereich von 13,5 MHz und erhalten aus dem Feld der RFID Transponder Leseeinheit die benötigte Energie. Auch HF RFID Transponder, die im Bereich oberhalb von 800 MHz rückstreubasiert arbeiten, lassen sich ebenfalls bevorzugt einsetzten. Die einzelnen RFID Transponder tragen eine eindeutige Kennung, insbesondere Positionskennung, anhand derer in der Sensoreinheit sich den jeweiligen RFID Transpondern eine eindeutige Position zuordnen lässt. Besonders einfach lassen sich die RFID Transponder mit einer fortlaufenden Zahlenfolge programmieren und die Zahlenfolge durch den Lesekopf auslesen. Ist in einer ersten Ausführungsform der Abstand zwischen zwei aufeinanderfolgende RFID Transponder bekannt, lässt sich durch die RFID Transponder Leseeinheit leicht eine absolute Position ermitteln und zusätzlich mittels der Induktionsdetektoreinheit durch Änderung der Induktion in der Nähe einer aus einem metallischen Werkstoff bestehenden Geber - Tei-leinheit, beispielsweise durch eine Induzierung von Wirbelströmen in dem metallischen Werkstoff, zumindest eine weitere Absolute Position der Sensoreinheit in Bezug auf den RFID Transponder bestimmen, d. h. eine hochauflösende Absolutposition wird aus einer Kombination von RFID Transponder Daten und der Änderung der Induktion bedingt durch eine aus einem metallischen Werkstoff bestehenden Geber - Teileinheit bestimmbar. Es versteht sich dass derartige metallische Werkstoffe zu bevorzugen sind, die in einem Magnetfeld eine besonders starke Induktion verursachen. In einer anderen Ausführungsform beinhaltet die Kennung des jeweiligen Transponders unmittelbar dessen Absolutposition auf der Schiene, so dass der erste Wert ohne Berechnungen unmittelbar aus dem RFID - Transponder ausgelesen wird.

Indem bei einer Verwendung eines derartigen Lesekopfes bei einem Positionsbestimmungssystem die Daten der Gebereinheit berührungslos ohne optische Hilfsmittel ermittelt werden können, ist der Lesekopf bzw. das System robust und unempfindlich gegenüber Verschmutzungen. Des Weiteren ist es vorteilhaft, insbesondere für einen Einsatz in sicherheitsrelevanten Systemen, dass in jeder Position in der ein RFID Transponder ausgelesen werden kann, die absolute Position der Leseeinheit ermittelt werden kann, ohne dass ein Referenzpunkt angefahren oder die letzte Position abgespeichert werden muss. Insbesondere bei einem Stromausfall ist dies von Vorteil, indem eine absolute Position ohne weiteres sich ermitteln lässt.

In einer Ausführungsform ist die Auswerteeinheit eingerichtet, die Grobauflösung der Absolutposition anhand des ersten Positionswertes und die Feinauflösung der Absolutposition anhand des zweiten Positionswertes zu bestimmen.

In einer Weiterbildung ist die Auswerteeinheit eingerichtet, die Absolutposition aus dem momentan ausgegebenen ersten Positionswert und dem momentan ausgegebenen zweiten Positionswert zu bestimmen. Hierzu erfolgt bei der Verschiebung die Erfassung der Positionswerte bzw. von den Positionsdaten kontinulerlich. Hierdurch lässt sich an allen Punkten bei einer Verschiebung jederzeit die jeweilige Position ermitteln. Vorzugsweise ist die Auswerteeinheit eingerichtet, die Grobauflösung der Absolutposition anhand des ersten Positionswertes und die Feinauflösung der Absolutposition anhand des zweiten Positionswertes zu bestimmen.

In einer anderen Weiterbildung umfasst die Sensoreinheit des Lesekopfes zusätzlich eine zweite RFID Transponder Leseeinheit. Bei einer entsprechenden Anordnung lassen sich von der Leseeinheit die Daten von zwei RFID Transpondern auslesen, wodurch die Sicherheit und Genauigkeit bei der Bestimmung der Position sich erhöht. Untersuchungen der Anmelderin haben gezeigt, dass es vorteilhaft ist, innerhalb der Sensoreinheit des Lesekopfs die Induktionsdetektoreinheit zwischen der ersten und zweiten RFID Transponder Leseeinheit anzuordnen. Durch die Redundanz der auf der Sensoreinheit angeordneten Sensoren lässt sich die Sensoreinheit besonders vorteilhaft bei sicherheitsrelevanten Systemen verwenden Fällt beispielsweise nämlich die Induktionsdetektoreinheit aus, lässt sich die Position, wenn auch gegebenenfalls mit einer geringeren Genauigkeit, nach wie vor absolut und zuverlässig anhand des einen oder der beiden RFID Transponder Leseeinheiten ermitteln.

In einer anderen Weiterbildung ist es vorteilhaft, zwischen der ersten und zweiten RFID Transponder Leseeinheit mehrere Induktionsdetektoreinheiten anzuordnen. Gemäß einer anderen bevorzugten Weiterbildung ist es vorteilhaft, innerhalb eines Lesekopfs eine alternierende Anordnung von mehreren RFID Transponder Leseeinheiten und mehreren Induktionsdetektoreinheiten vorzusehen und dass die Länge des Lesekopfes wenigstens die Länge einer Gebereinheit, bestehend aus wenigstens einer aus einem metallischen Werkstoff bestehenden Geber - Teileinheit , der zwischen einem ersten RFID Transponder und einem zweiten RFID Transponder angeordnet ist, aufweist.

Es zeigt sich, dass vorzugsweise die Sensoreinheit in Richtung der beispielsweise auf einer Schiene angeordneten Gebereinheiten eine Längsachse aufweist die im Wesentlichen parallel zu der Längsrichtung der Schiene ausgebildet ist. Des Weiteren sind die Leseeinheit und die Detektoreinheit d.h. die Induktionsdetektoreinheit in einer Linie, welche im Wesentlichen parallel zu der Längsachse ausgebildet ist, angeordnet.

Gemäß einer anderen Ausführungsform, weist der Lesekopf die gleiche Anzahl von zwischen zwei aufeinander folgenden RFID Transponder Leseeinheiten liegenden Induktionsdetektoreinheiten auf, wie bei der Gebereinheit zwischen zwei aufeinander folgenden RFID Transpondern angeordneten aus einem metallischen Werkstoff bestehenden Teil - Gebereinheiten angeordnet sind. Hierdurch lassen sich die Daten aus einer einzelnen Gebereinheit mittels des Lesekopfes vollständig erfassen, ohne dass der Lesekopf zur Erfassung der Daten gegenüber der Gebereinheit verschoben werden muss.

In Zusammenhang mit einer Aneinanderreihung von einer Vielzahl von Gebereinheiten und der Ausbildung einer alternierenden Anordnung von RFID Transpondern und den aus dem metallischen Werkstoff bestehenden Teil - Gebereinheiten, lässt sich ein Absolutpositionsbestimmungssystem für eine präzise Bestimmung der Absolutposition auch bei Längen von mehreren 100 m aufbauen. Hierbei ist es bevorzugt, die Gebereinheiten an einer Schiene anzuordnen, wobei am Ende und Anfang der Schiene jeweils ein RFID Transponder ausgebildet ist. Untersuchungen der Anmelderin haben gezeigt, dass bei auf einem Band angeordneten Gebereinheiten, das Band mit den Gebereinheiten sich kostengünstig und fortlaufend an einer Schiene beispielsweise durch einen Klebeprozess anbringen lässt. Wird der Lesekopf an einem Fahrzeug, insbesondere Schienenfahrzeug angeordnet, lässt sich die Position des Schienenfahrzeuges einfach und zuverlässig bestimmen. Umfasst mit dem Begriff Schienenfahrzeug sind alle zwangsgeführten Systeme, unabhängig von deren geometrischen Ausbildung. Insbesondere haben Untersuchungen der Anmelderin gezeigt, dass der erfindungsgemäße Lesekopf bevorzugt auch in Positioniersystemen bei Kränzen mit einem Durchmesser oberhalb von mehreren Metern anwendbar ist.

In einer anderen Weiterbildung umfasst die Auswerteeinheit eine Auswerteelektronik zur Ausgabe der Position, anhand der von einer Gebereinheit erfassten Daten. Weiterhin ist es bevorzugt, die Auswerteelektronik auf einer Platine oberhalb der Sensoreinheiten anzuordnen. Ferner ist es bevorzugt, dass die Sensoreinheit des Lesekopfes eine derartige Länge aufweist, dass an jeder Position des Lesekopfes sowohl die ersten Werte wenigstens eines RFID Transponders als auch mittels den Induktionsdaten der Induktionsdetektoreinheit, bedingt durch die Änderung der Induktion eines ausgesendeten Magnetfeldes, wenn in dem als Teil Gebereinheit ausgeführten metallischen Werkstoff Wirbelströme induziert werden, die zweiten Werte erfasst werden.

In einer Weiterbildung lässt sich der metallische Werkstoff der Gebereinheit auch als Permanentmagnet ausbilden. Hierdurch erübrigt sich die Aussendung eines magnetischen Wechselfeldes von der Induktionsdetektoreinheit. Stattdessen wird als Induktionsdetektoreinheit ein Hallsensor zur Detektion des Magnetfeldes verwendet.

Die Erfindung wird nachfolgend unter Bezugnahme auf die Zeichnungen näher erläutert. Hierbei werden gleichartige Teile mit identischen Bezeichnungen beschriftet. Darin zeigen die:
- Figur 1: eine Draufsicht auf eine erste Ausführungsform einer Aneinanderreihung einer Vielzahl von Gebereinheiten,
- Figur 2a: eine Draufsicht auf eine erste Ausführungsform eines Lesekopfes,
- Figur 2b: eine Draufsicht auf eine alternative Ausführungsform eines Lesekopfes,
- Figur 3: eine Seitenansicht auf ein erfindungsgemäßes Positionsbestimmungssystem,
- Figur 4: eine Draufsicht auf eine zweite Ausführungsform einer Aneinanderreihung einer Vielzahl von Gebereinheiten,
- Figur 5: eine Draufsicht auf eine zweite Ausführungsform eines Lesekopfes.

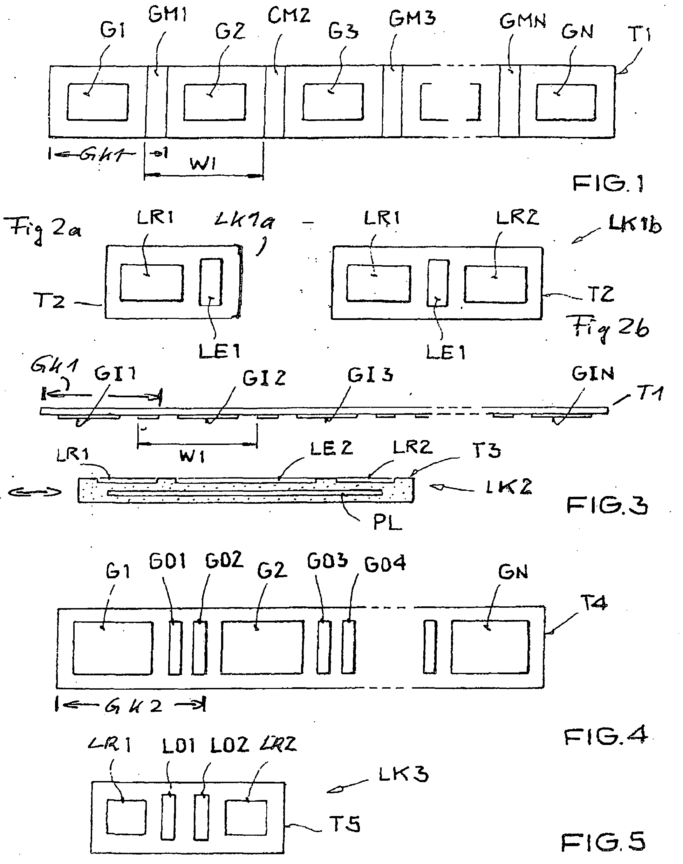

Die Abbildung der Figur 1 zeigt eine Draufsicht auf eine erste schematische Ausführungsform einer Aneinanderreihung von Gebereinheiten angeordnet auf einen ersten Träger T1. Der erste Träger T1 ist vorzugsweise als flexibles Band ausgebildet das vorzugsweise von einer Rolle abrollbar ist. Eine erste Gebereinheit GK1 besteht aus einem RFID Transponder G1 und einem metallischen Werkstoff bestehenden Teil Gebereinheit GM1. Entsprechend umfassen die nachfolgenden Gebereinheiten einen RFID Transponder G2 und aus einem metallischen Werkstoff bestehenden Geber - Teileinheit GM2 bzw. einen RFID Transponder G3 und aus einem metallischen Werkstoff bestehenden Geber - Teileinheit GM3, sowie die letzte Gebereinheit einen RFID Transponder GMN-1 und aus einem metallischen Werkstoff bestehenden Geber - Teileinhelt GMN-1. Die Aneinanderreihung von Gebereinheiten, die eine alternierende Anordnung von RFID Transpondern und metallischen Werkstoffen darstellt, wird durch einen RFID Transponder GN abgeschlossen. Die Länge einer Gebereinheit beträgt W1 und stellt gleichzeitig das Wiederholmaß bei der Aneinanderreihung der Gebereinheiten dar. Damit sich das Wiederholmaß von Gebereinheit zu Gebereinheit möglichst nicht ändert und die Genauigkeit der Positionsbestimmung nicht negativ beeinflusst wird, ist das Band in Längsrichtung möglichst wenig dehnbar auszuführen.

Die Abbildung der Figur 2a zeigt eine Draufsicht auf eine schematische Ausführungsform eines Lesekopfes mit einer Sensoreinheit LK1a. Die Sensoreinheit LK1a umfasst eine erste RFID Transponder Leseeinheit LR1 und einer erste Induktionsdetektoreinheit LE1. Ferner sind die Leseeinheiten auf einem Baugruppenträger T2 angeordnet.

Die Abbildung der Figur 2b zeigt eine Draufsicht auf eine schematische alternative Ausführungsform eines Lesekopfes mit einer Sensoreinheit LK1b. Die Sensoreinheit LK1b umfasst die erste RFID Transponder Leseeinheit LR1, die erste Induktionsdetektoreinheit LE1 und eine zweite RFID Transponder Sensoreinheit LR2.

Die Abbildung der Figur 3 zeigt eine schematische Seitenansicht auf ein erfindungsgemäßes Positionsbestimmungssystem, aufweisend eine Aneinanderreihung von Gebereinheiten, wie bereits In Zusammenhang mit den Zeichnungsunterlagen dargestellt in der Figur 1 erläutert, und einen Lesekopf mit einer zweiten Sensoreinheit LK2 mit der ersten RFID Transponder Leseeinheit LR1 und einer ersten Induktionsdetektoreinheit LE2 und der zweiten RFID Transponder Leseeinheit LR2 angeordnet auf einem Baugruppenträger T3. Des Weiteren umfasst die Sensoreinheit LK2 eine ebenfalls auf dem Baugruppenträger T3 angeordnete Platine PL zur Aufnahme einer Auswerteelektronik. Der Abstand der Sensoreinheit LK2 zu der auf der Oberseite des ersten Trägers T1 angeordneten Gebereinheiten wird derart gewählt, dass die Daten der RFID Transponder und die Änderung der Induktion aufgrund der metallischen Werkstoff zuverlässig erfasst werden. Der Abstand liegt vorzugsweise im Bereich von wenigen mm bis einigen cm. Des Weiteren ist die Sensoreinheit LK2 gegenüber der Aneinanderreihung von den Gebereinheiten verschiebbar.

Die Abbildung der Figur 4 zeigt eine Draufsicht auf eine zweite schematische dargestellte Ausführungsform einer Aneinanderreihung von Gebereinheiten, welche auf einem Träger T4 ausgebildet sind. Nachfolgend werden nur die Unterschiede zu der ersten Ausführungsform, erläutert in Zusammenhang mit der Beschreibung der Abbildung der Figur 1, beschrieben. Demnach umfasst eine Gebereinheit GK2 den Transponder G1 und zwei aufeinanderfolgenden Bereiche mit je einer aus einem metallischen Werkstoff bestehenden Geber - Teileinheit GO1 und G02. Die Abstände zwischen den aus einem metallischen Werkstoff bestehenden Geber - Teileinheiten werden derart gewählt, dass die Sensoreinheit eine bestmögliche Ortsauflösung erzielen kann.

In der Abbildung der Figur 5 wird eine Draufsicht auf eine zweite schematische dargestellte Ausführungsform eines Lesekopfes mit einer dritten Sensoreinheit LK3, angeordnet auf einem Baugruppenträger T5, gezeigt. Nachfolgend werden nur die Unterschiede zu der ersten Ausführungsform, erläutert in Zusammenhang mit der Beschreibung der Abbildung der Figur 2, beschrieben. Demgemäß umfasst die dritte Sensoreinheit LK3 eine erste Induktionsdetektoreinheit LO1 und eine zweite Induktionsdetektoreinheit L02. Beide Induktionsdetektoreinheiten LO1 und LO2 sind zwischen den beiden RFID Transponder Leseeinheiten LR1 und LR2 ausgebildet. Die Anordnung der beiden Induktionsdetektoreinheiten LO1 und LO2 ist besonders auf die zweite Ausführungsform einer Gebereinheit, dargestellt in der Figur 4, angepasst, um die beiden zwischen den RFID Transponder angeordneten aus einem metallischen Werkstoff bestehenden Teil-Gebereinheiten zu erfassen.

Des Weiteren lässt sich die dritte Sensoreinheit LK3 auch für die Ausführungsform einer Gebereinheit mit nur einer aus einem metallischen Werkstoff bestehenden Geber - Teileinheit angeordnet zwischen zwei RFID Transpondern verwenden. Ebenfalls lässt sich die Sensoreinheit LK2 oder LK1A, LK1B auch für die Gebereinheit, erläutert in Zusammenhang mit den Zeichnungsunterlagen der Figur 4 verwenden.

Es versteht sich, dass die für die geometrische Ausbildung des Lesekopfes und der Sensoreinheit eine rechteckige Ausbildung bevorzugt ist, bei der die Leseeinheit und die Detektoreinheit auf einer Linie, welche im Wesentlichen parallel zu der Längsachse des Lesekopfes ausbildet ist, angeordnet sind. Die Längsachse wiederum zeigt in Richtung der Reihe der Gebereinheiten.

## Patentansprüche

1. Lesekopf mit einer Sensoreinheit (LK1A, LK1B, LK2, LK3), wobei
die Sensoreinheit (LK1A, LK1B, LK2, LK3) eine erste RFID Transponder Leseeinheit (LR1, LR2) und eine erste Induktionsdetektoreinheit (LE1) aufweist, und
der Lesekopf eine Längsachse aufweist und in Richtung der Längsachse entlang einer Schiene verschiebbar ist,
eine mit der RFID Transponder Leseeinheit (LR1, LR2) und mit der ersten Induktionsdetektoreinheit (LE1) verbundene Auswerteeinheit vorgesehen ist
**dadurch gekennzeichnet, dass**
die RFID Transponder Leseeinheit (LR1, LR2) zur Absolutpositionsbestimmung eingerichtet ist und einen ersten Positionswert ausgibt, und
die erste Induktionsdetektoreinheit (LE1) zur Absolutpositionsbestimmung eingerichtet ist und einen zweiten Positionswert ausgibt, und
die Auswerteeinheit eingerichtet ist, eine Absolutposition aus dem ersten Positionswert und dem zweiten Positionswert zu bestimmen.

2. Lesekopf nach Anspruch 1, **dadurch gekennzeichnet, dass** die Auswerteeinheit eingerichtet ist, die Absolutposition aus dem momentan ausgegebenen ersten Positionswert und dem momentan ausgegebenen zweiten Positionswert zu bestimmen.

3. Lesekopf nach Anspruch 1 oder Anspruch 2, **dadurch gekennzeichnet, dass** die Auswerteeinheit eingerichtet ist, die Grobauflösung der Absolutposition anhand des ersten Positionswertes und die Feinauflösung der Absolutposition anhand des zweiten Positionswertes zu bestimmen.

4. Lesekopf nach einem der Ansprüche 1 bis 3, **dadurch gekennzeichnet, dass** die Leseeinheit (LR1, LR2) und die erste Induktionsdetektoreinheit (LE1) in einer Linie, die im Wesentlichen parallel zu der Längsachse verläuft, angeordnet sind.

5. Lesekopf nach einem der Ansprüche 1 bis 4, **dadurch gekennzeichnet, dass** die Sensoreinheit (LK1A, LK1B, LK2, LK3) eine zweite RFID Transponder Leseeinheit (LR1, LR2) umfasst.

6. Lesekopf nach Anspruch 5, **dadurch gekennzeichnet, dass** die Induktionsdetektoreinheit (LE1, LE2) zwischen der ersten und zweiten RFID Transponder Leseeinheit (LR1, LR2) angeordnet ist.

7. Lesekopf nach Anspruch 5 oder 6, **dadurch gekennzeichnet, dass** zwischen der ersten und zweiten RFID Transponder Leseeinheit (LR1, LR2) eine zweite Induktionsdetektoreinheit (LO1, L02) angeordnet ist.

8. Lesekopf nach einem der Ansprüche 5 bis 7, **dadurch gekennzeichnet, dass** der Lesekopf eine alternierende Anordnung von mehreren RFID Transponder Leseeinhelten (LR1, LR2) und mehreren Induktionsdetektoreinheiten (LO1, LO2) aufweist.

9. Lesekopf nach einem der Ansprüche 1 bis 8, **dadurch gekennzeichnet, dass** die Länge des Lesekopfes wenigstens die Länge einer Gebereinheit (GK1, GK2), bestehend aus wenigstens einem ersten metallischen Werkstoffs bestehenden Geber-Teileinheit, die zwischen einem ersten RFID Transponder (G1^{.}- GN) und einem zweiten RFID Transponder (G1 - GN) angeordnet ist, aufweist.

10. Lesekopf nach einem der Ansprüche 1 bis 9, **dadurch gekennzeichnet dass**, der Lesekopf die gleiche Anzahl von zwischen zwei aufeinander folgenden RFID Transponder Leseeinheiten (LR1, LR2) liegenden Induktionsdetektoreinheiten (LO1, LO2) aufweist, wie bei der Gebereinheit zwischen zwei aufeinander folgenden RFID Transpondern (LR1, LR23) angeordneten metallische Werkstoffe (GO1, G02).

11. Lesekopf nach einem der Ansprüche 1 bis 10, **dadurch gekennzeichnet, dass** die Sensoreinheit (LK1A, LK1B, LK2, LK3) auf einem Fahrzeug angebracht ist.

12. Verfahren zur Bestimmung der Absolutposition, mit
einem Lesekopf mit einer Sensoreinheit (LK1A, LK1B, LK2, LK3), wobei
die Sensoreinheit (LK1A, LK1B, LK2, LK3), eine erste RFID Transponder Leseeinheit (LR1, LR2) und eine erste Induktionsdetektoreinheit (LE1) aufweist, und
der Lesekopf eine Längsachse aufweist und in Richtung der Längsachse entlang einer Schiene verschiebbar ist,
eine mit der RFID Transponder Leseeinheit (LR1, LR2) und mit der ersten Induktionsdetektoreinheit (LE1) verbundene Auswerteeinheit vorgesehen ist,
**dadurch gekennzeichnet, dass**
von der RFID Transponder Leseeinheit (LR1, LR2) zur Absolutpositionsbestimmung einen ersten Positionswert ausgeben wird, und
von der ersten Induktionsdetektoreinheit (LE1) zur Absolutpositionsbestimmung und einen zweiten Positionswert ausgegeben wird, und
von der Auswerteeinheit eine Absolutposition aus dem ersten Positionswert und dem zweiten Positionswert bestimmt wird.

## Claims

1. Reader head with a sensor unit (LK1A, LK1B, LK2, LK3), wherein the sensor unit (LK1A, LK1B, LK2, LK3) comprises a first RFID transponder reader unit (LR1, LR2) and a first induction detector unit (LE1), the reader head has a longitudinal axis and is displaceable along a rail in the direction of the longitudinal axis, and an evaluating unit, which is connected with the RFID transponder reader unit (LR1, LR2) and with the first induction detector unit (LE1), is provided, **characterised in that** the RFID transponder reader unit (LR1, LR2) is arranged for absolute position determination and outputs a first position value, the first inductor detector unit (LE1) is arranged for absolute position determination and outputs a second position value and the evaluating unit is arranged to determine an absolute position from the first position value and the second position value.

2. Reader head according to claim 1, **characterised in that** the evaluating unit is arranged to determine the absolute position from the instantaneous output first position value and the instantaneous output second position value.

3. Reader head according to claim 1 or claim 2, **characterised in that** the evaluating unit is arranged to determine the coarse resolution of the absolute position on the basis of the first position value and the fine resolution of the absolute position on the basis of the second position value.

4. Reader head according to any one of claims 1 to 3, **characterised in that** the reader unit (LR1, LR2) and the first induction detector unit (LE1) are arranged in a line extending substantially parallel to the longitudinal axis.

5. Reader head according to any one of claims 1 to 4, **characterised in that** the sensor unit (LK1A, LK1B, LK2, LK3) comprises a second RFID transponder reader unit (LR1, LR2).

6. Reader head according to claim 5, **characterised in that** the induction detector unit (LE1, LE2) is arranged between the first and second RFID transponder reader units (LR1, LR2).

7. Reader head according to claim 5 or 6, **characterised in that** a second induction detector unit (LO1, LO2) is arranged between the first and second RFID transponder reader units (LR1, LR2).

8. Reader head according to any one of claims 5 to 7, **characterised in that** the reader head has an alternating arrangement of several RFID transponder reader units (LR1, LR2) and several induction detector units (LO1, LO2).

9. Reader head according to any one of claims 1 to 8, **characterised in that** the length of the reader head has at least the length of a transmitter unit (GK1, GK2), consisting of a transmitter sub-unit which consists of at least a first metallic material and which is arranged between a first RFID transponder (G1 - GN) and a second RFID transponder (G1 - GN).

10. Reader head according to any one of claims 1 to 9, **characterised in that** the reader head has the same number of induction detector units (LO1, LO2) lying between two successive RFID transponder reader units (LR1, LR2) as metallic materials (GO1, GO2) arranged for the transmitter unit between two successive RFID transponders (LR1, LR2).

11. Reader head according to any one of claims 1 to 10, **characterised in that** the sensor unit (LK1A, LK1B, LK2, LK3) is mounted on a vehicle.

12. Method of determining absolute position, comprising a reader head with a sensor unit (LK1A, LK1B, LK2, LK3), wherein the sensor unit (LK1A, LK1B, LK2, LK3) comprises a first RFID transponder reader unit (LR1, LR2) and a first induction detector unit (LE1), the reader head has a longitudinal axis and is displaceable along a rail in the direction of the longitudinal axis, and an evaluating unit, which is connected with the RFID transponder reader unit (LR1, LR2) and with the first induction detector unit (LE1), is provided, **characterised in that** a first position value is output by the RFID transponder reader unit (LR1, LR2) for the absolute position determination, a second position value is output by the first induction detector unit (LE1) for the absolute position determination and an absolute position is determined from the first position value and the second position value by the evaluating unit.

## Revendications

1. Tête de lecture avec une unité de capteur (LK1A, LK1B, LK2, LK3), dans laquelle l'unité de capteur (LK1A, LK1B, LK2, LK3) présente une première unité de lecture transpondeur RFID (LR1, LR2) et une première unité de détecteur à induction (LE1), et la tête de lecture présente un axe longitudinal et est déplaçable le long d'un rail dans la direction de l'axe longitudinal, il est prévu une unité d'exploitation reliée à l'unité de lecture transpondeur RFID (LR1, LR2) et à la première unité de détecteur à induction (LE1), **caractérisée en ce que** l'unité de lecture transpondeur RFID (LR1, LR2) est conçue pour la détermination de position absolue et émet une première valeur de position, et la première unité de détecteur à induction (LE1) est conçue pour la détermination de position absolue et émet une deuxième valeur de position, et l'unité d'exploitation est conçue pour déterminer une position absolue à partir de la première valeur de position et de la deuxième valeur de position.

2. Tête de lecture selon la revendication 1, **caractérisée en ce que** l'unité d'exploitation est conçue pour déterminer la position absolue à partir de la première valeur de position émise instantanément et de la deuxième valeur de position émise instantanément.

3. Tête de lecture selon la revendication 1 ou la revendication 2, **caractérisée en ce que** l'unité d'exploitation est conçue pour déterminer la résolution grossière de la position absolue à l'aide de la première valeur de position et la résolution fine de la position absolue à l'aide de la deuxième valeur de position.

4. Tête de lecture selon l'une quelconque des revendications 1 à 3, **caractérisée en ce que** l'unité de lecture (LR1, LR2) et la première unité de détecteur à induction (LE1) sont disposées en une ligne, qui est essentiellement parallèle à l'axe longitudinal.

5. Tête de lecture selon l'une quelconque des revendications 1 à 4, **caractérisée en ce que** l'unité de capteur (LK1A, LK1B, LK2, LK3) comprend une deuxième unité de lecture transpondeur RFID (LR1, LR2).

6. Tête de lecture selon la revendication 5, **caractérisée en ce que** l'unité de détecteur à induction (LE1, LE2) est disposée entre la première et la deuxième unités de lecture transpondeur RFID (LR1, LR2).

7. Tête de lecture selon la revendication 5 ou 6, **caractérisée en ce qu'**une deuxième unité de détecteur à induction (LO1, L02) est disposée entre la première et la deuxième unités de lecture transpondeur RFID (LR1, LR2).

8. Tête de lecture selon l'une quelconque des revendications 5 à 7, **caractérisée en ce que** la tête de lecture présente un agencement alterné de plusieurs unités de lecture transpondeur RFID (LR1, LR2) et de plusieurs unités de détecteur à induction (LO1, L02).

9. Tête de lecture selon l'une quelconque des revendications 1 à 8, **caractérisée en ce que** la longueur de la tête de lecture présente au moins la longueur d'une unité de capteurs (GK1, GK2), se composant d'au moins une partie de capteur constituée d'un premier matériau métallique, qui est disposée entre un premier transpondeur RFID (G1-GN) et un deuxième transpondeur RFID ((G1-GN).

10. Tête de lecture selon l'une quelconque des revendications 1 à 9, **caractérisée en ce que** la tête de lecture présente le même nombre d'unités de détecteur à induction (LO1, L02) situées entre deux unités de lecture transpondeur RFID successives (LR1, LR2) que de matériaux métalliques (GO1, G02) disposés dans l'unité de capteurs entre deux transpondeurs RFID successifs (LR1, LR2).

11. Tête de lecture selon l'une quelconque des revendications 1 à 10, **caractérisée en ce que** l'unité de capteur (LK1A, LK1B, LK2, LK3) est installée sur un véhicule.

12. Procédé de détermination de la position absolue, avec une tête de lecture avec une unité de capteur (LK1A, LK1B, LK2, LK3), dans lequel l'unité de capteur (LK1A, LK1B, LK2, LK3) présente une première unité de lecture transpondeur RFID (LR1, LR2) et une première unité de détecteur à induction (LE1), et
la tête de lecture présente un axe longitudinal et est déplaçable le long d'un rail dans la direction de l'axe longitudinal,
il est prévu une unité d'exploitation reliée à l'unité de lecture transpondeur RFID (LR1, LR2) et à la première unité de détecteur à induction (LE1),
**caractérisé en ce que**
on émet à partir de l'unité de lecture transpondeur RFID (LR1, LR2) une première valeur de position pour la détermination de position absolue, et
on émet à partir de l'unité de détecteur à induction (LE1) une deuxième valeur de position pour la détermination de position absolue, et
on détermine, au moyen de l'unité d'exploitation, une position absolue à partir de la première valeur de position et de la deuxième valeur de position.
